(19) Europäisches Patentamt
European Patent Office
Office européen des brevets

(11) **EP 0 514 857 B1**

(12) **EUROPÄISCHE PATENTSCHRIFT**

(45) Veröffentlichungstag und Bekanntmachung des Hinweises auf die Patenterteilung:
**21.10.1998 Patentblatt 1998/43**

(51) Int Cl.⁶: **G02F 1/29**, G02F 1/35, G02F 1/21

(21) Anmeldenummer: **92108496.8**

(22) Anmeldetag: **20.05.1992**

(54) **Optischer Schalter**

Optical switch

Commutateur optique

(84) Benannte Vertragsstaaten:
**AT BE CH DE ES FR GB IT LI NL SE**

(30) Priorität: **23.05.1991 DE 4116789**

(43) Veröffentlichungstag der Anmeldung:
**25.11.1992 Patentblatt 1992/48**

(73) Patentinhaber:
• **ALCATEL ALSTHOM COMPAGNIE GENERALE D'ELECTRICITE**
  **75008 Paris (FR)**
  Benannte Vertragsstaaten:
  **DE**
• **ALCATEL N.V.**
  **NL-1077 XX Amsterdam (NL)**
  Benannte Vertragsstaaten:
  **BE CH ES FR GB IT LI NL SE AT**

(72) Erfinder:
• **Dorn, Reimund, Dr.**
  **W-7141 Schwieberdingen (DE)**
• **Kersten, Peter, Dr.**
  **W-7250 Leonberg (DE)**

• **Rehm, Werner, Dr.**
  **W-7000 Stuttgart 61 (DE)**
• **Wischmann, Wiltraud, Dr.**
  **W-7016 Gerlingen (DE)**

(74) Vertreter: **Schätzle, Albin, Dipl.-Phys. et al**
  **c/o Alcatel Alsthom,**
  **Intellectual Property Department,**
  **P.O. Box 30 09 29**
  **70449 Stuttgart (DE)**

(56) Entgegenhaltungen:
**WO-A-91/04506** **GB-A- 2 240 188**
**US-A- 3 930 718**

• **JOURNAL OF APPLIED PHYSICS, Bd. 64, Nr. 5, September 1988, New York US, Seiten 2749-2751; J.R. HILL et al. 'Demonstration of the linear electro-optic effect in a thermopoled polymer film'**
• **DATABASE WPIL Derwent Publications Ltd., London, GB; AN 89-09785 (13); & JP-A-01 046 734**

## Beschreibung

Die Erfindung bezieht sich auf einen optischen Schalter nach dem Oberbegriff des Anspruchs 1.

Optische Schalter werden im einfachsten Fall verwandt, um einen einzigen Lichtstrahl entweder in eine Richtung A oder eine Richtung B zu lenken. Durch das Schalten des Lichtstrahls wird dieser beispielsweise entweder zu einem Empfänger A' in der Richtung A oder zu einem Empfänger B' in der Richtung B gestrahlt. Der Lichtstrahl läßt sich somit zwischen den Empfängern A' und B' hin- und herschalten. Ein anderer, noch einfacherer Schalter besteht darin, daß der Lichtstrahl in ihm entweder durchgelassen oder reflektiert wird. In diesem Falle läßt sich der Lichtstrahl in Richtung zu einem einzigen Empfänger A' entweder an- oder ausschalten. Als Teil eines solchen optischen Schalters, durch den der Lichtstrahl in eine erste oder eine zweite Richtung gelenkt wird, eignet sich insbesondere ein Hologramm.

Aus einem Aufsatz von J. R. Hill et al. mit dem Titel ,,Demonstration of the linear electro-opic effect in a thermopoled polymer film", J. Appl. Phys. 64 (5), 1988, S. 2749-1751, ist ein elektro-optischer Modulator bekannt, bei dem als elekto-optisch aktives Material ein Polymer verwendet wird. Die im Polymer enthaltenen Farbstoffmoleküle werden ausgerichtet, indem das Polymer im geschmolzenen Zustand einem elektrischen Feld ausgesetzt wird. Dadurch lassen sich dauerhafte Brechungsindexänderungen im Polymer erzeugen. Der dort beschriebene Modulator umfaßt ein Glas-Substrat, eine Polymer-Schicht sowie mehrere zwischen Substrat und Polymer angeordnete Elektroden.

Aus der US-A-3 930 718 ist ein elektro-optischer Modulator bekannt, der mit einem Fabry-Perot-Etalon kombiniert ist. Das elektro-optische Material ist dort von zwei sich gegenüberliegenden (teil-)reflektierenden Flächen umschlossen. Dies erlaubt den Modulator mit niedrigen Ansteuerspannungen anzusteuern.

Ferner ist aus der WO-A-91/04506 ein optisches Filter bekannt, welches aus mehreren übereinander angeordneten organischen Schichten besteht. Wenigstens eine der Schichten ist elektro-optisch aktiv, so daß bei Anlegen einer elektrischen Spannung die Eigenschaften des Filters verändert werden können.

Aus Applied Optics 27 (1988), S. 4244 bis 4250, ist ein dort als "Holoswitch" bezeichneter optischer Schalter bekannt, der eine Anordnung aus jeweils einander zugeordneten Flüssigkristallzellen und polarisierenden Strahlteilern sowie eine flächenhafte Anordnung von Hologrammen umfaßt.

Je eine Flüssigkristallzelle und je ein Strahlteiler sowie je ein Hologramm sind in dem optischen Schalter einander zugeordnet. Die Hologramme bilden unveränderliche, vorgegebene Beugungsstrukturen.

Die Flüssigkristallzellen lenken jeweils ein Bündel von Lichtstrahlen, die beispielsweise von mehreren Laserlichtquellen erzeugt werden, auf eines der Hologramme ab, das die Lichtstrahlen jeweils auf einen Detektor ablenkt.

Die Flüssigkristallzellen werden jeweils elektrisch gesteuert. In Abhängigkeit von der angelegten Spannung schalten sie zwischen zwei zueinander senkrechten Polarisationszuständen in den Lichtstrahlen. Die Strahlteiler, die den Flüssigkristallzellen in Übertragungsrichtung der Lichtstrahlen nachgeschaltet sind, sind je nach Polarisationszustand für die Lichtstrahlen durchlässig oder reflektieren sie. Somit gelangen die Lichtstrahlen erst nach dem Durchlaufen der Flüssigkeitskristalle und des Strahlteilers auf das jeweilige Hologramm.

Dieser bekannte optische Schalter ist in einem Aluminiumgehäuse angeordnet, das neben dem Schalter noch Befestigungsmittel enthält und das Seitenlängen 19 cm, 19 cm und 23 cm hat. Dies bedeutet, daß der optische Schalter einen großen Raumbedarf hat.

Darüber hinaus begrenzt der Wechsel zwischen den zwei Polarisationszuständen in den Flüssigkristallzellen die Schaltgeschwindigkeit dieses optischen Schalters.

Es ist die Aufgabe der Erfindung, einen optischen Schalter zu schaffen, der auch für hohe optische Übertragungsgeschwindigkeiten einsetzbar ist.

Die Aufgabe wird, wie in Patentanspruch 1 angegeben, gelöst.

Ein erfindungsgemäßer optischer Schalter hat den Vorteil, daß er einfach herstellbar ist, da er weder Flüssigkristallzellen, die einzeln elektrisch angesteuert werden müssen, noch Strahlteiler aufweist. Daraus ergibt sich auch sein platzsparender Aufbau.

Vorteilhafte Weiterbildungen sind den Unteransprüchen zu entnehmen.

Im folgenden wird die Erfindung in Ausführungsbeispielen anhand der Zeichnungen näher erläutert. Es zeigen:

Fig. 1    einen optischen Schalter mit einer einzigen Schicht,

Fig. 2    einen einen Fabry-Pérot-Resonator aufweisenden optischen Schalter,

Fig. 3    einen optischen Schalter mit mehreren Schichten und

Fig. 4    einen optischen Schalter mit einer einzigen Schicht und einer Vielzahl von Elektroden.

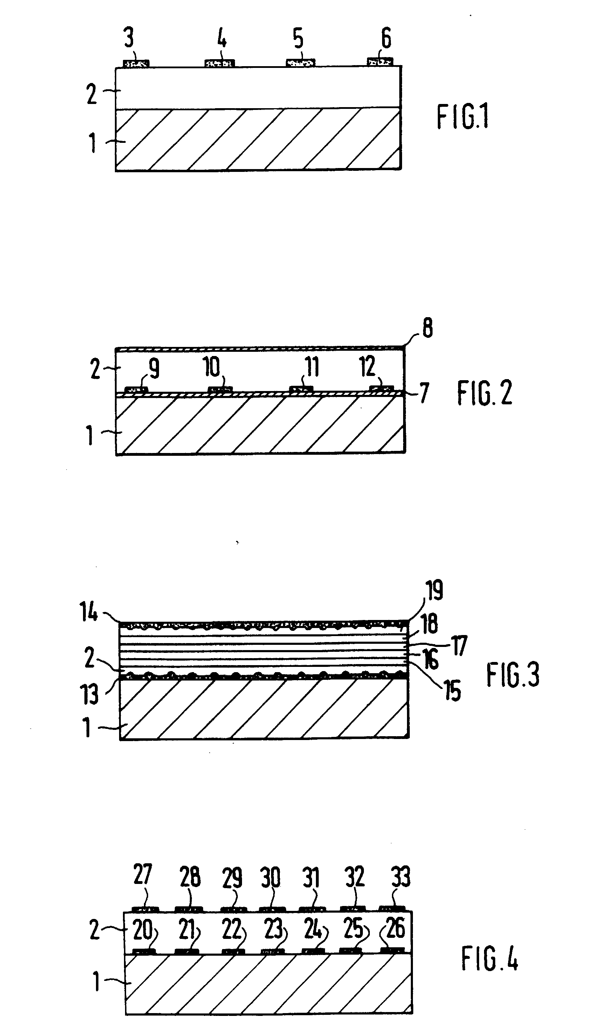

Ein optischer Schalter (Fig. 1) weist ein Substrat 1 und eine Schicht 2 auf, die sich oberhalb des Substrats 1 unmittelbar auf diesem erstreckt. Das Substrat 1 besteht vorzugsweise aus einem Dielektrikum, z.B. Glas. Die Schicht 2 enthält ein Material mit optisch nicht-linearen Eigenschaften; es ist entweder ein anorganischer oder ein organischer Kristall oder ein Polymer oder ein Polymerengemisch, in dem wenigstens eines der in dem Gemisch enthaltenen Polymere nicht-linear optische Eigenschaften hat. Die Schicht 2 hat vorzugsweise eine Dicke von 1 µm oder wenigen Mikrometern.

Oberhalb der Schicht 2 sind Elektroden 3, 4, 5 und 6 aufgebracht, die lichtdurchlässig sein können und z. B. aus Indium-Zinnoxid bestehen. An diese Elektroden werden Spannungen angelegt. Dadurch werden zwischen den Elektroden, beispielsweise zwischen den Elektroden 3 und 4 sowie den Elektroden 5 und 6, elektrische Felder erzeugt, die in der Schicht 2 eine dreidimensionale Beugungsstruktur erzeugen. Die elektrischen Felder ändern beispielsweise die Brechzahl des Materials in dem Bereich zwischen den Elektroden, wodurch in der Schicht 2 ein Interferenzmuster entsteht, das gemäß der anliegenden elektrischen Spannung veränderbar ist. Wenn nun, vorzugsweise von oben, ein Wellenzug vorzugsweise kohärenten Lichts in die Schicht 2 eingestrahlt wird, trifft er auf dieses Interferenzmuster. Er wird dann beispielsweise als ganzer in eine bestimmte Richtung gelenkt, oder es werden Teile des Wellenzuges in je verschiedene Richtungen gelenkt. Durch das elektrische Feld in der Schicht 2 kann deren Brechungsindex und auch deren Absorption verändert werden.

Für die Schicht 2 eignen sich insbesondere optisch nicht-lineare Polymere zweiter Ordnung. Derartige Polymere sind beispielsweise aus IEEE J. Quantum Electronics, QE-21 (1985), Seiten 1286 bis 1295 bekannt. Diese Polymere enthalten beispielsweise Farbstoffmoleküle, die für die hier vorgesehene Anwendung räumlich ausgerichtet sein müssen. Diese Ausrichtung erfolgt vorzugsweise durch einen Polungsprozeß. Hierzu wird die Schicht 2 erwärmt, bevorzugt auf eine Temperatur nahe der Erweichungstemperatur, einem elektrischen Feld ausgesetzt und bei anliegendem elektrischen Feld abgekühlt.

Die durch den Polungsprozeß erfolgte Ausrichtung der Farbstoffmoleküle beeinflußt den Brechungsindex dieser Polymere. Damit läßt sich in der Schicht 2 ein Interferenzmuster erzeugen, welches auch nach seiner Herstellung durch Anlegen elektrischer Felder über eine Brechzahländerung modifizierbar ist.

Statt, wie in Fig. 1 gezeigt, oberhalb der Schicht 2, lassen sich auch zwischen dem Substrat 1 und der Schicht 2 Elektroden aufbringen.

Ein optischer Schalter nach Fig. 2 weist einen Fabry-Pérot-Resonator auf. Außer dem Substrat 1 und der Schicht 2 weist er Spiegel 7, 8 auf, die beispielsweise aus einem Dielektrikum bestehen. Der Spiegel 7 erstreckt sich zwischen der Schicht 2 und dem Substrat 1, der Spiegel 8 bedeckt die Schicht 2 von oben. Auf der Oberseite des Spiegels 7 sind Elektroden 9 bis 12 aufgebracht.

Statt auf der Oberseite des Spiegels 7 lassen sich die Elektroden 9 bis 12 auch zwischen dem Substrat 1 und dem Spiegel 7 anordnen. Der Spiegel 8 ist teilweise durchlässig für einen von seiner Oberseite auf ihn einstrahlenden Wellenzug, der Spiegel 7 ebenfalls teildurchlässig oder undurchlässig.

Anhand von Fig. 3 wird ein Ausführungsbeispiel des erfindungsgemäßen optischen Schalters beschrieben, der auf dem Substrat 1 als einzige Elektrode eine strukturierte Elektrode 13 aufweist. Oberhalb der Schicht 2 erstrecken sich weitere Schichten 15 - 19, die vorzugsweise alle die gleiche Dicke haben wie hier die Schicht 2.

Die Schicht 19, d.h. die oberste Schicht, wird von einer ebenfalls strukturierten Elektrode 14 bedeckt. Mindestens eine der Elektroden 13, 14 ist lichtdurchlässig für das zu schaltende Licht.

In einem anderen, hier nicht dargestellten Ausführungsbeispiel weist der optische Schalter(gemäß Fig. 3) zwei lichtdurchlässige Elektroden 13, 14 auf. Zwischen dem Substrat 1 und der Elektrode 13 sowie oberhalb der Elektrode 14 wird, ähnlich wie in Fig. 2 dargestellt, der Spiegel 7 bzw. 8 angeordnet.

Wegen der Spiegel 7 und 8 durchläuft das durch den Spiegel 8 in die Schicht 2 hineingelangende Licht die Schicht 2 mehrfach, so daß sich die Wirkung der durch die elektrischen Felder hervorgerufenen Beugungsstrukturen verstärkt. Auf diese Weise kann ein derartiger optischer Schalter auch bei kleineren Ansteuerspannungen betrieben werden.

Die Schichten 2, 15 - 19 in den beiden zuletzt genannten Ausführungsbeispielen lassen sich vorzugsweise ebenfalls aus optisch nicht-linearen Polymeren zweiter Ordnung herstellen. Sie sind gepolt, wodurch jeweils übereinanderliegende Schichten voneinander abweichende nicht-lineare optische Eigenschaften aufweisen. Insbesondere können Polymere wie Polymethylmethacrylat übereinander geschichtet werden, die unterschiedlich stark mit einem optisch nicht-linearen Farbstoff dotiert sind und in einem Corona-Prozeß gepolt werden. Dieser ist beispielsweise aus J. Appl. Phys. 67 (1990), Seiten 1037 bis 1041 bekannt. Brechungsindices der gepolten, optisch nicht-linearen Schichten lassen sich durch ein über die Elektroden 13, 14 erzeugtes elektrisches Feld verändern, wobei die Änderung der Brechungsindices in übereinanderliegenden Schichten unterschiedlich ist.

Die beiden zuletzt beschriebenen Anordnungen sind dann besonders effizient, wenn die Brechungsindices der Schichten 2, 15 - 19 bei verschwindendem elektrischen Feld übereinstimmen und sich unter dem Einfluß eines elektrischen Feldes gegensinnig ändern. Hierzu werden die Farbstoffmoleküle in übereinanderliegenden Schichten bei der Polung gegensinnig ausgerichtet, d.h. die Polung ist entgegengesetzt.

Zur Herstellung dieser unterschiedlich gepolten Schichten werden beispielsweise für die Schichten 2, 15 - 19 abwechselnd zwei Polymere mit unterschiedlichen Erweichungstemperaturen verwendet. Nach Herstellen der Schichtfolge wird zunächst bei der höheren Erweichungstemperatur gepolt, so daß eine homogene Ausrichtung der Farbstoffmoleküle in allen Schichten 2, 15 - 19 entsteht. In einem zweiten Polungsprozeß bei der tieferen Erweichungstemperatur wird nun mit dem entgegengesetzten elektrischen Feld gepolt, wobei wegen der geringeren Temperatur nur in jeder zweiten Schicht die Farbstoffmoleküle umorientiert werden.

Alternativ zur Verwendung zweier NLO-Polymere mit unterschiedlichem Erweichungsverhalten kann auch ein NLO-Polymer verwendet werden, dessen Erweichungsverhalten veränderbar ist. Insbesondere kommen vernetzbare NLO-Polymere in Betracht, bei denen die Ausrichtung der Farbstoffmoleküle während oder nach der Polung durch Vernetzen des NLO-Polymers fixiert wird. Die Schichten 2, 15 - 19 werden jeweils nach ihrer Aufbringung gepolt und vernetzt, wobei zur Polung vorzugsweise der Corona-Prozeß benützt wird.

Durchläuft nun eine schräg auf den optischen Schalter gemäß Fig. 3 einfallende Lichtwelle die Schichten 2, 15 - 19, so wird nur ein geringer Teil des Lichts an den Grenzflächen der Elektroden 13, 14 und des Substrats 1 reflektiert, wenn alle Schichten 2, 15 - 19 den gleichen Brechungsindex haben. Unterscheiden sich jedoch die Brechungsindices aufeinanderfolgender Schichten und ist hierbei die Braggsche Reflexionsbedingung mit:

$$z \cdot \lambda = 2 \cdot d \cdot \sin \varphi$$

z: Ordnung (ganze Zahl),
$\lambda$: Wellenlänge,
d: Dicke der einzelnen Schicht und
$\varphi$: Glanzwinkel,

erfüllt, so tritt eine starke Reflexion des Lichtstrahls auf. Zwischen diesen beiden optischen Zuständen kann der optische Schalter durch Anlegen unterschiedlicher Spannungen an die Elektroden 13 und 14 geschaltet werden. In einem Schaltzustand kann die angelegte Spannung auch null sein.

Besteht nun mindestens eine der Elektroden 13, 14 aus mehreren Bereichen, so können durch die elektrische Ansteuerung unterschiedlich stark reflektierende Bereiche erzeugt werden.

Bei der Polung optisch nicht-linearer Polymere tritt eine mit einer Brechzahländerung verbundene Doppelbrechung auf. Über diese Brechzahländerung lassen sich Schichtfolgen 2, 15 - 19 herstellen, die bereits bei verschwindendem elektrischen Feld zu einer Bragg-Reflexion führen. Damit lassen sich Beugungsstrukturen realisieren, die bereits ohne Feld wirksam sind und durch elektrische Felder modifiziert werden können.

Ein weiterer optischer Schalter (Fig. 4) enthält oberhalb des Substrats 1 wieder die Schicht 2, aber keine weiteren Schichten. Er ist mit einer Vielzahl von Elektroden versehen. Elektroden 20 - 26 zwischen dem Substrat 1 und der Schicht 2, die Elektroden 27 - 33 hingegen oberhalb der Schicht 2. Durch diese Anordnung läßt sich elektrisch schon bei der Herstellung dieses optischen Schalters oder sowohl bei der Herstellung als auch im Betrieb des optischen Schalters oder ausschließlich während des Betriebs ein bestimmtes entweder feststehendes oder veränderbares Interferenzmuster erzeugen. Insbesondere lassen sich die Elektroden während der Polung sequentiell ansteuern. So kann jeweils zwischen zwei Elektroden zu einer bestimmten Zeit ein elektrisches Feld anliegen, das eine beliebig schrägliegende Polungszone erlaubt.

So lassen sich z.B. die je zwei Elektroden 21, 27; 22, 28; 23, 29; 24, 30; 25, 31 und 26, 32 nacheinander ansteuern.

Auf diese Weise lassen sich Interferenzmuster erzeugen, die auch für senkrecht einfallendes Licht wirksam sind.

## Patentansprüche

1. Optischer Schalter mit einer sich oberhalb eines Substrates (1) erstreckenden ersten Schicht (2) aus lichtdurchlässigem, optisch nichtlineare Eigenschaften besitzendem Material, in dem eine durch ein elektrisches Feld beeinflußbare dreidimensionale Beugungsstruktur gespeichert ist oder durch Einwirkenlassen eines elektrischen Feldes hervorgerufen werden kann, mit mindestens zwei Elektroden (3-6, 20-33, 13, 14), an die eine elektrische Spannung angelegt werden kann, um das elektrische Feld zu erzeugen,
**dadurch gekennzeichnet,** daß der ersten Schicht (2) zwei weitere Schichten (15-19) aus optisch nicht linearen Eigenschaften besitzendem Material aufliegen, daß die erste Schicht wie auch die weiteren Schichten eine molekulare Ausrichtung besitzen, die jeweils verschieden von der der darüberliegenden und der der darunterliegenden Schicht ist.

2. Optischer Schalter nach Anspruch 1, dadurch gekennzeichnet, daß die molekulare Ausrichtung der weiteren Schichten jeweils um 180° entgegengesetzt zu der der darüberliegenden und der der darunterliegenden Schicht ist.

3. Optischer Schalter nach Anspruch 1 oder 2, dadurch gekennzeichnet, daß das optisch nicht lineare Eigenschaften besitzende Material ein Polymer mit einer molekularen Ausrichtung ist, die durch Abkühlen des zuvor erwärmten Polymers unter die Erweichungstemperatur unter Einwirkung eines elektrischen Feldes erschaffen wurde.

4. Optischer Schalter nach einem der Ansprüche 1 bis 3, dadurch gekennzeichnet, daß die Elektroden (9-12) zwischen dem Substrat (1) und der ersten Schicht (2) angeordnet sind.

5. Optischer Schalter nach einem der Ansprüche 1 bis 3, dadurch gekennzeichnet, daß die Elektroden (20-26; 27-33) zum Teil oberhalb der auf der ersten Schicht (2) aufliegenden weiteren Schichten (15-19), zum Teil zwischen dem Substrat (1) und der ersten Schicht angeordnet sind.

6. Optischer Schalter nach einem der Ansprüche 1 bis 3, dadurch gekennzeichnet, daß eine Elektrode (13) oberhalb der auf der ersten Schicht (2) aufliegenden weiteren Schichten (15-19) und eine Elektrode (14) zwischen dem Substrat (1) und der ersten Schicht (2) angeordnet sind, daß die der ersten Schicht (2) zugewandten Oberflächen der Elektroden strukturiert sind und daß zumindest eine der Elektroden für das zu schaltende Licht durchlässig ist.

## Claims

1. An optical switch comprising a first layer (2) of transparent, optically nonlinear material extending above a substrate (1), in which material a three-dimensional diffraction pattern capable of being influenced by an electric field is recorded or can be produced by application of an electric field, and at least two electrodes (3, 6, 20-33, 13, 14) to which a voltage can be applied for producing the electric field, **characterized in** that two further layers (15-19) of optically nonlinear material extend above the first layer (2), and that both the first layer and the further layers have a molecular orientation which is different from the respective molecular orientations of the overlying and underlying layers.

2. An optical switch as claimed in claim 1, characterized in that the respective molecular orientations of the further layers are opposite to those of the overlying and underlying layers.

3. An optical switch as claimed in claim 1 or 2, characterized in that the optically nonlinear material is a polymer having a molecular orientation which was established by cooling the previously heated polymer to a temperature below the softening point with an electric field applied to it.

4. An optical switch as claimed in any one of claims 1 to 3, characterized in that the electrodes (9-12) are disposed between the substrate (1) and the first layer (2).

5. An optical switch as claimed in any one of claims 1 to 3, characterized in that the electrodes (20-26; 27-33) are disposed partly above the further layers (15-19) extending above the first layer (2) and partly between the substrate (1) and the first layer.

6. An optical switch as claimed in any one of claims 1 to 3, characterized in that one electrode (13) is disposed above the further layers (15-19) extending above the first layer (2), and one electrode (14) is disposed between the substrate (1) and the first layer (2), that the electrode surfaces facing the first layer (2) are patterned, and that at least one of the electrodes is transparent to the light to be switched.

## Revendications

1. Interrupteur optique avec une première couche (2) s'étendant au-dessus d'un substrat (1) et à base de matériau translucide, présentant des caractéristiques non linéaires sur plan optique, dans lequel une structure de diffraction tridimensionnelle pouvant être influencée par un champ électrique est mémorisée ou peut être provoquée par l'action d'un champ électrique, avec au moins deux électrodes (3-6, 20-33, 13, 14), sur lesquelles on peut appliquer une tension électrique pour générer le champ électrique, caractérisé en ce que deux autres couches (1b-19) à base de matériau possédant des caractéristiques non linéaires sur plan optique reposent sur la première couche (2), et en ce qu'ensuite la première couche et les autres couches ont une configuration moléculaire, qui est différente de celle de la couche supérieure et de celle de la couche inférieure.

2. Interrupteur optique selon la revendication 1, caractérisé en ce que l'configuration moléculaire des autres couches est opposée respectivement de 180° par rapport à celle de la couche supérieure et à celle de la couche inférieure.

3. Interrupteur optique selon la revendication 1 ou 2, caractérisé en ce que le matériau possédant des caractéristiques non linéaires sur plan optique est un polymère avec une configuration moléculaire, qui a été obtenue par le refroidissement du polymère sus-mentionné au-dessous de la température de ramollissement sous l'effet d'un champ électrique.

4. Interrupteur optique selon l'une quelconque des revendications 1 à 3, caractérisé en ce que les électrodes (9-12) sont disposées entre le substrat (1) et la première couche (2).

5. Interrupteur optique selon l'une quelconque des revendications 1 à 3, caractérisé en ce que les électrodes (20-26 ; 27-33) sont disposées partiellement au-dessus des autres couches (15-19) reposant sur la première couche (2) et partiellement entre le substrat (1) et la première couche.

6. Interrupteur optique selon l'une quelconque des revendications 1 à 3, caractérisé en ce qu'une électrode (13) est disposée au-dessus des autres couches (15-19) reposant sur la première couche (2) et une électrode (14) est disposée entre le substrat (1) et la première couche (2), en ce que les surfaces, tournées vers la première couche (2), des électrodes sont structurées et en ce qu'au moins l'une de électrodes est transparente pour la lumière à commuter.

3    4    5    6

2

1

FIG.1

8

2

9   10      11   12

7    FIG.2

1

19

14                                    18
                                      17
2                                     16
                                      15
13                                    FIG.3

1

27  28  29  30  31  32  33

2   20  21  22  23  24  25  26

1   FIG.4